# FASCICULE DE BREVET EUROPEEN

(11) **EP 0 805 076 B1**
(45) Date de publication et mention de la délivrance du brevet: **28.11.2001**
(21) Numéro de dépôt: 97400987.0
(22) Date de dépôt: 30.04.1997
(51) Int. Cl.: B60R 22/34

(54) **Dispositif de positionnement d'un enrouleur de ceinture de sécurité dans un véhicule automobile**
Vorrichtung zum Positionieren eines Sicherheitsgurt-Aufrollers in einem Kraftfahrzeug
Device for positioning a seat belt retractor in a motor vehicle

(30) Priorité: 02.05.1996 FR 9605512
(43) Date de publication de la demande: 05.11.1997
(73) Titulaire: AUTOMOBILES PEUGEOT, 75116 Paris (FR); AUTOMOBILES CITROEN, 92200 Neuilly-sur-Seine (FR)
(72) Inventeur: Berthommier, Michel, 91360 Epinay Sur Orge (FR)
(74) Mandataire: Lanceplaine, Jean-Claude

(56) Documents cités:
- DE-A- 3 318 740
- DE-A- 3 343 104
- FR-A- 1 536 500

## Description

La présente invention a pour objet un dispositif de positionnement d'un enrouleur de ceinture de sécurité dans un véhicule automobile.

Lors de la fabrication des véhicules automobiles, certains éléments sont équipés de moyens d'aide au montage permettant un prépositionnement et un prémaintien de ces éléments sur les structures de support.

Ces moyens ont pour but de faciliter les interventions de l'opérateur afin que ce dernier n'ait pas à tenir en même temps l'élément à monter et les organes de fixation ce qui évite une détérioration de ces organes de fixation, notamment lorsque ceux-ci sont constitués par des vis et des écrous.

Par ailleurs, certains éléments ne peuvent être montés que d'un côté du véhicule tandis que d'autres éléments ne peuvent être montés que de l'autre côté de ce véhicule.

A cet effet, ces éléments sont pourvus de systèmes détrompeurs n'autorisant le montage desdits éléments qu'à des emplacements bien déterminés.

C'est le cas par exemple des enrouleurs de ceinture de sécurité qui comportent une structure de support dans laquelle est montée en rotation une bobine porte-sangle de l'enrouleur et destinée à être fixée sur un organe de réception solidaire de la caisse du véhicule.

On connaît des enrouleurs de ceinture de sécurité dont la structure de support comporte une patte métallique coopérant avec une ouverture ménagée dans l'organe de support de façon à prémaintenir l'enrouleur dans une position proche de sa position définitive avant la pose des organes de fixation définitive.

Mais, dans ce cas, l'opérateur est obligé de positionner les éléments de fixation sur la structure de support de l'enrouleur et sur l'organe de réception, puis de les maintenir et de les assembler ce qui peut entraîner des dégradations sur ces éléments, notamment lorsque ceux-ci sont constitués par un ensemble vis-écrou.

On connaît également des enrouleurs de ceinture de sécurité qui comportent soit un écrou solidaire de la structure de support de l'enrouleur ou soit une vis prépositionnée sur l'organe de réception de cet enrouleur par exemple par une rondelle en carton.

On connaît également du document DE-A-3 318 740, qui représente l'état de la technique le plus proche pour un enrouleur de ceinture de sécurité, un dispositif de positionnement d'un enrouleur de ceinture de sécurité dans un véhicule automobile, du type comprenant une structure de support dans laquelle est montée en rotation une bobine porte-sangle de l'enrouleur et destinée à être fixée sur un organe de réception solidaire de la caisse du véhicule. La structure du support comporte un taquet de centrage et un orifice fileté destiné à recevoir un élément de vissage sur l'organe de réception.

Avec ce type d'enrouleur, l'opérateur est obligé de maintenir la structure de support de l'enrouleur ainsi que l'enrouleur, tout en procédant à sa fixatior sur l'organe de réception ce qui augmente le temps nécessaire pour le montage de ces enrouleurs.

Par ailleurs, ces enrouleurs ne comportent aucun moyen permettant d'éviter le montage d'un enrouleur gauche à droite du véhicule ou inversement ou encore un enrouleur avant à l'arrière ou inversement.

Pour éviter ces erreurs, il est connu d'apposer sur les enrouleurs des pastilles de couleurs différentes ou des étiquettes ou de graver la mention gauche ou droite ou avant ou arrière, ce qui a pour inconvénient d'obliger l'opérateur à procéder à une lecture des inscriptions avant la pose.

L'invention a pour but d'éviter ces inconvénients en proposant un dispositif de positionnement d'un enrouleur de ceinture de sécurité dans un véhicule automobile qui permet, par des moyens simples, de placer sans ambiguïté possible l'enrouleur sur son organe de réception avant sa fixation et de le fixer définitivement par des mouvements simples et rapides.

L'invention a donc pour objet un dispositif de positionnement d'un enrouleur de ceinture de sécurité dans un véhicule automobile, du type comprenant une structure de support dans laquelle est montée en rotation une bobine porte-sangle de l'enrouleur et destinée à être fixée sur un organe de réception solidaire de la caisse du véhicule, caractérisé en ce que la structure de support comporte au moins un ensemble vis-écrou prémonté sur ladite structure de support et coopérant avec une découpe ménagée dans l'organe de réception pour le prémontage dudit enrouleur avant sa fixation sur l'organe de réception et pour la fixation de cet enrouleur et en ce qu'il comporte des organes détrompeurs formés par une ouverture de forme oblongue ménagée dans l'organe de réception et par un élément en relief disposé sur la structure de support de l'enrouleur et coopérant avec ladite ouverture pour placer ledit enrouleur sur ledit organe de réception avant sa fixation.

Selon d'autres caractéristiques de l'invention :
- l'écrou est solidaire de la structure de support de l'enrouleur,
- la tête de la vis ménage avec La structure de support de l'enrouleur un espace libre,
- la vis est immobilisée par rapport à la structure de support de l'enrouleur pendant le transport de cet enrouleur,
- la vis est immobilisée par au moins un point de colle déposé sur la tige de la vis,
- la découpe ménagée dans l'organe de réception est formée par une première ouverture de largeur supérieure à la tête de la vis et par une seconde ouverture débouchant dans la première ouverture et de largeur comprise entre la largeur de la tige de la vis et la largeur de la tête de ladite vis,
- le dispositif comporte des moyens de maintien de l'enrouleur sur l'organe de réception avant sa fixation définitive sur ledit organe de réception,
- les moyens de maintien sont formés par l'élément en relief constituant un élément en relief d'accrochage,
- l'élément en relief d'accrochage est formé par un crochet, un ergot ou un pion,
- l'élément en relief est formé par un ergot, un pion ou une patte,
- les moyens de maintien sont formés par une ouverture ménagée dans l'organe de réception et par un élément en relief d'accrochage disposé sur la structure de support de l'enrouleur et coopérant avec ladite ouverture,
- l'élément en relief d'accrochage est formé par un crochet ou une patte en forme de T.

Les caractéristiques et avantages de l'invention apparaîtront à la lecture de la description qui va suivre, donnée uniquement à titre d'exemple et faite en référence aux dessins annexés, sur lesquels :
- la Fig. 1 est une vue partiellement en coupe et de côté d'un premier mode de réalisation d'un dispositif de positionnement d'un enrouleur de ceinture de sécurité, conforme à l'invention,
- la Fig. 2 est une vue en coupe selon la ligne 2-2 de la Fig. 1,
- la Fig. 3 est une vue partiellement en coupe et de côté d'un second mode de réalisation d'un dispositif de positionnement d'un enrouleur de ceinture de sécurité, conforme à l'invention,
- la Fig. 4 est une vue en coupe selon la ligne 4-4 de la Fig. 3,
- la Fig. 5, est une vue partiellement en coupe et de côté d'un troisième mode de réalisation d'un dispositif de positionnement d'un enrouleur de ceinture de sécurité, conforme à l'invention,
- la Fig. 6 est une vue en coupe selon la ligne 6-6 de la Fig. 5,

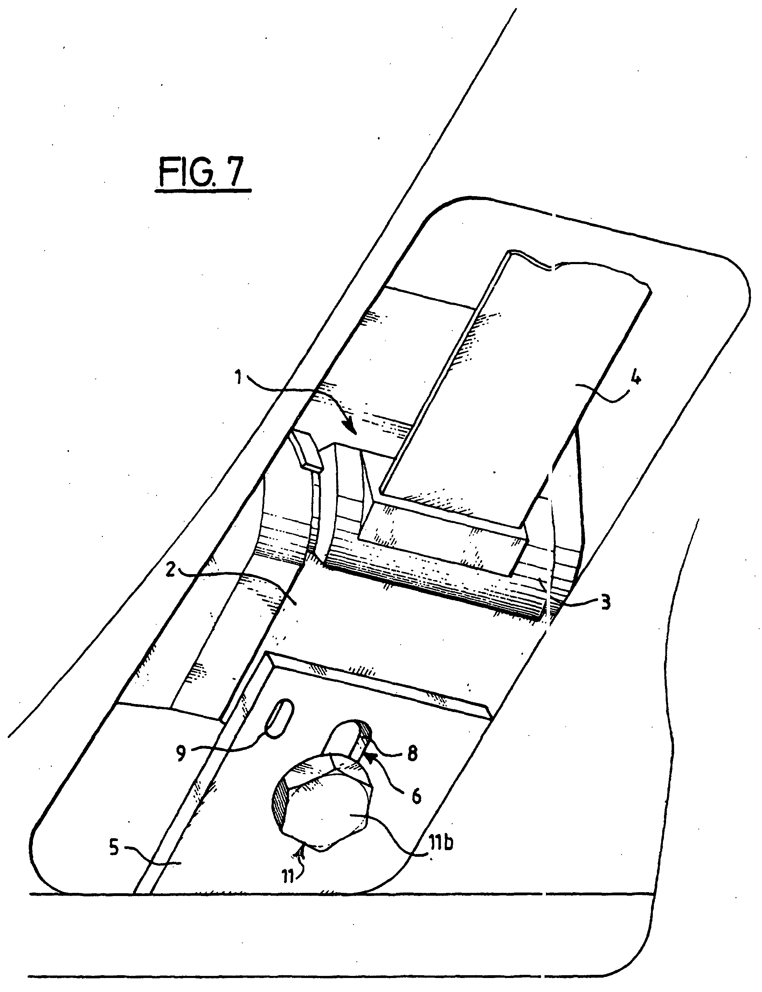

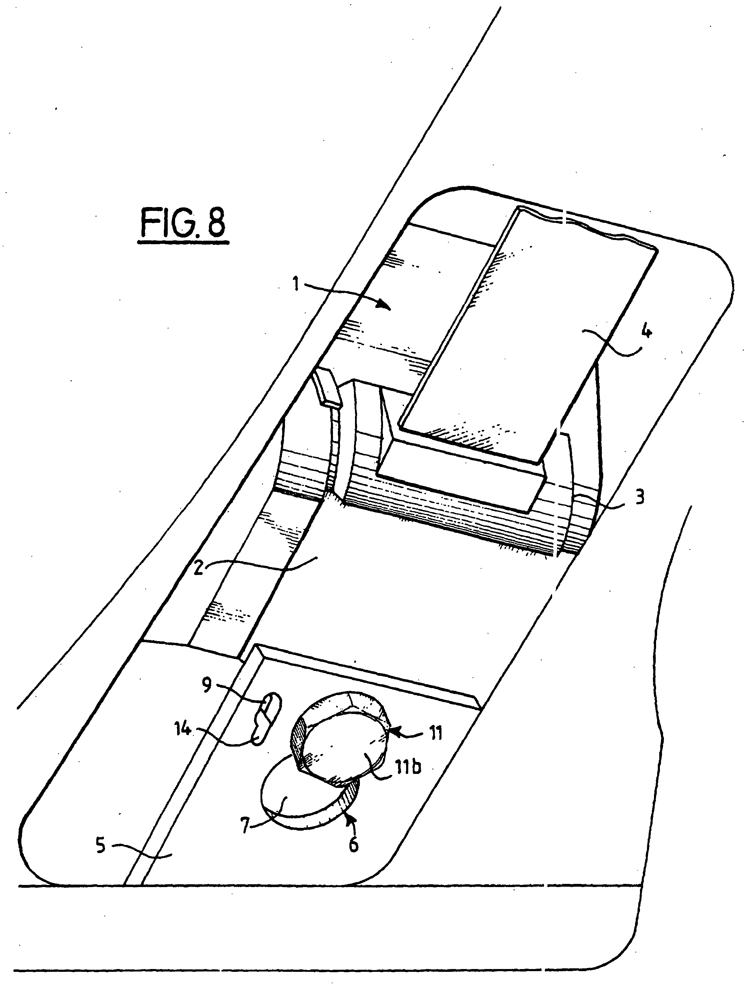

- les Figs. 7 et 8 sont deux vues schématiques en perspective montrant le montage de l'enrouleur muni du dispositif de positionnement correspondant au mode de réalisation représenté aux Figs. 1 et 2.

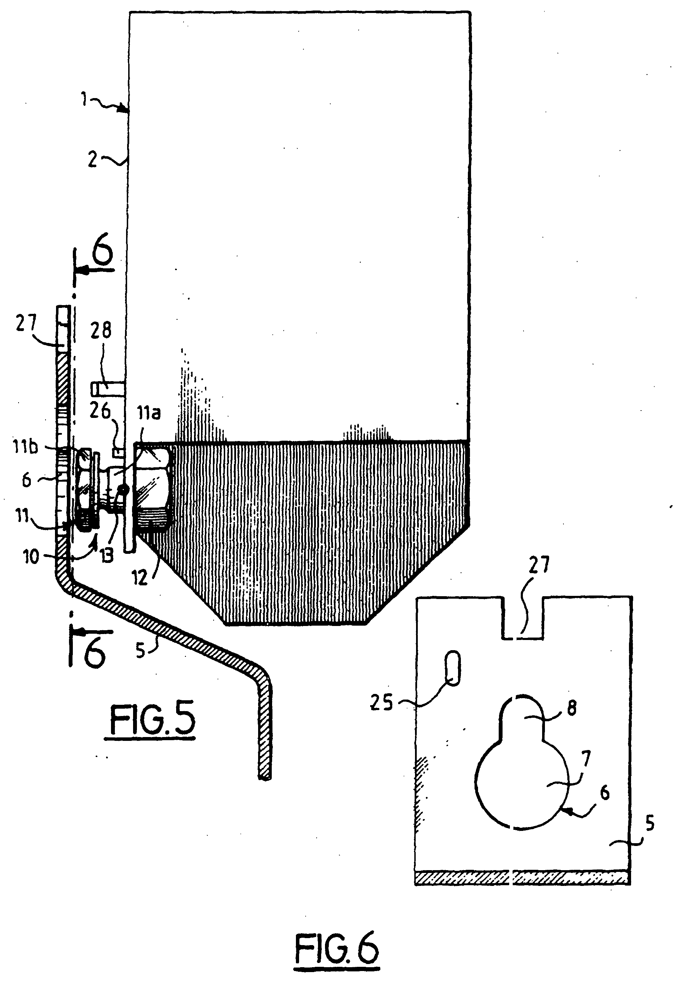

Sur les figures, on a représenté schématiquement un enrouleur 1 de ceinture de sécurité qui comporte une structure de support 2 dans laquelle est montée, de manière classique, une bobine porte-sangle 3, (Figs. 5 et 6), reliée à dès moyens connus de sécurité de verrouillage de la sangle 4 et à des moyens de rappel de ladite sangle 4 en position enroulée sur ladite bobine 3.

La structure de support 2 de l'enrouleur 1 est destinée à être fixée sur un organe de réception 5 solidaire de la caisse du véhicule automobile.

Pour cela, la structure de support 2 de l'enrouleur 1 comporte au moins un ensemble vis-écrou 10 prémonté sur ladite structure de support 2 et coopérant avec une découpe 6 ménagée dans l'organe de réception 5 pour le prémontage dudit enrouleur 1 avant sa fixation sur ledit organe de réception 5 et pour la fixation définitive de cet enrouleur 1.

Cet ensemble vis-écrou 10 est constitué, d'une part, d'une vis 11 comportant une tige filetée 11a et une tête 11b et, d'autre part, d'un écrou 12 solidaire de la structure de support 2 de l'enrouleur 1.

Cet écrou 12 est fixé par exemple par soudage sur la face de la structure porteuse 2 opposée à celle destinée à venir s'appliquer sur l'organe de réception 5.

Avant la livraison de l'enrouleur 1 au constructeur automobile, le fabricant de cet enrouleur 1 prépositionne la vis 11 dans l'écrou 12 de telle manière que la tête 11b de cette vis 11 ménage avec la structure de support 2 un espace libre de l'ordre de 10mm.

Pour éviter le dévissage de la vis 11 de l'écrou 12 pendant le transport de l'enrouleur 1, cette vis 11 est immobilisée par rapport à la structure de support 2 de l'enrouleur 1, par exemple par au moins un point de colle 13 déposé sur la tige 11a de ladite vis 11.

La découpe 6 ménagée dans l'organe de réception 5 a par exemple la forme d'une poire et est formée par une première ouverture 7 de largeur supérieure à la tête 11b de la vis 11 et par une seconde ouverture 8 débouchant dans la première ouverture 7 et de largeur comprise entre la largeur de la tige 11a ce la vis 11 et la largeur de la tête 11b de ladite vis 11.

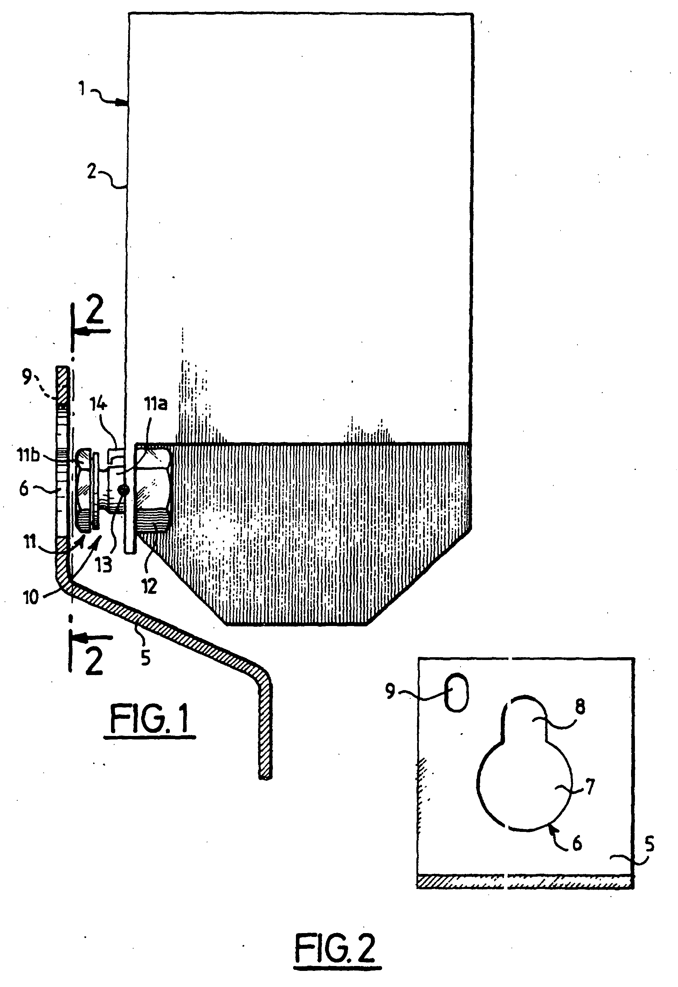

Ainsi que représenté sur les Figs. 2, 4 et 6, la seconde ouverture 8 est disposée au-dessus de la première ouverture 7 et dans l'axe de ladite première ouverture 7.

De plus, le dispositif de positionnement comporte des organes détrompeurs gauche-droit ou avant-arrière pour le montage de l'enrouleur 1 sur l'organe de réception 5 et des moyens de maintien de l'enrouleur 1 sur l'organe de réception 5 avant sa fixation définitive sur ledit organe de réception 5.

Selon un premier mode de réalisation représenté sur les Figs. 1 et 2, les organes détrompeurs et les moyens de maintien sont formés par les mêmes éléments.

Ainsi, les organes détrompeurs et de maintien sont formés par une ouverture 9 par exemple de forme oblongue ménagée dans l'organe de réception 5 et par un élément en relief 14 d'accrochage disposé sur la structure de support 2 de l'enrouleur 1 et destiné à coopérer avec ladite ouverture 9.

Cet élément en relief 14 d'accrochage est formé par exemple par un ergot, un pion ou un crochet.

Dans l'exemple de réalisation représenté à la Fig. 1, l'élément en relief 14 d'accrochage est constitué par un crochet.

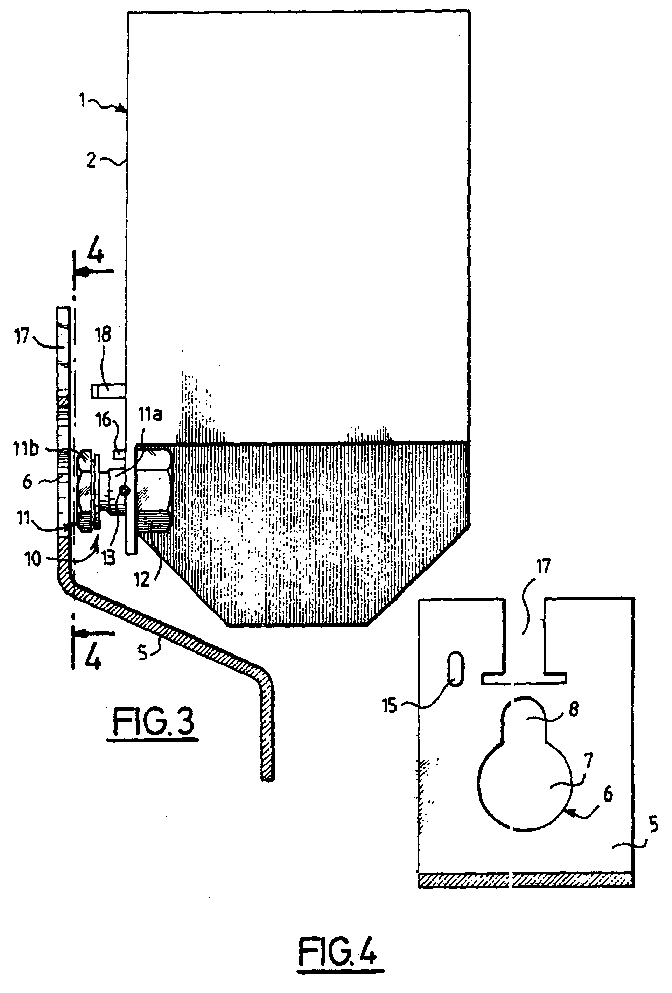

Selon un second mode de réalisation représenté aux Figs. 3 et 4, le dispositif de positionnement comporte des organes détrompeurs gauche-droit ou avant-arrière pour le montage de l'enrouleur 1 sur l'organe de réception 5 et des moyens de maintien de cet enrouleur 1 sur l'organe de réception 5 avant sa fixation définitive sur ledit organe de réception 5 qui sont constitués par des éléments différents de ceux constituant les organes détrompeurs.

Ainsi que représenté sur les Figs. 3 et 4, les organes détrompeurs sont formés par une ouverture 15 par exemple de forme oblongue ménagée dans l'organe de réception 5 et par un élément en relief 16 disposé sur la structure de support 2 de l'enrouleur 1 et destiné à coopérer avec ladite ouverture 15.

Par ailleurs, les moyens de maintien sont formés par une ouverture 17 ménagée par exemple à la partie supérieure de l'organe de réception 5 et par un élément en relief 18 d'accrochage disposé sur la structure de support 2 de l'enrouleur 1 et destiné à coopérer avec ladite ouverture 17.

L'élément en relief 16 est formé par exemple par un ergot, un pion ou une patte et l'élément en relief 18 d'accrochage est formé par exemple par un crochet ou une patte en forme de T.

Dans ce mode de réalisation, l'élément en relief 16 est formé par un pion et l'élément en relief 18 d'accrochage est formé par une patte en forme de T.

D'autre part, l'ouverture 17 a la forme d'un T dans le plan de l'organe de réception 5.

Selon un troisième mode de réalisation représenté aux Figs. 5 et 6, le dispositif de positionnement comporte des organes détrompeurs gauche-droit ou avant-arrière pour le montage de l'enrouleur 1 sur l'organe de réception 5 et des moyens de maintien de cet enrouleur 1 sur l'organe de réception 5 avant sa fixation définitive sur ledit organe de réception 5 qui sont constitués par des éléments différents de ceux constituant les organes détrompeurs.

Ainsi que représenté sur les Figs. 5 et 6, les organes détrompeurs sont formés par une ouverture 25 par exemple de forme oblongue ménagée dais l'organe de réception 5 et par un élément en relief 26 disposé sur la structure de support 2 de l'enrouleur 1 et destiné à coopérer avec ladite ouverture 15.

Par ailleurs, les moyens de maintien sont formés par une ouverture 27 ménagée par exemple à la partie supérieure de l'organe de réception 5 et par un élément en relief 28 d'accrochage disposé sur la structure de support 2 de l'enrouleur 1 et destiné à coopérer avec ladite ouverture 27.

L'élément en relief 26 est formé par exemple par un ergot, un pion ou une patte et l'élément en relief 28 d'accrochage est formé par exemple par un crochet ou une patte en forme de T.

Dans ce mode de réalisation, l'élément en relief 26 est formé par un pion et l'élément en relief 28 d'accrochage est formé par une patte en forme de T.

D'autre part, l'ouverture 27 est formée dans ce mode de réalisation par une encoche de hauteur déterminée.

Le montage de l'enrouleur 1 sur l'organe de réception 3 est réalisé de la façon suivante.

L'opérateur prend, l'enrouleur 1 dont la structure de support 2 est prééquipée de l'ensemble *vis*-écrou 10 et glisse cet enrouleur 1 derrière l'organe de réception 5 de façon à introduire la tête 11b de la vis 11 dans la première ouverture 7 de la découpe 6 ménagée dans l'organe de réception 5, comme représenté à la Fig. 5.

Ensuite, l'opérateur glisse l'enrouleur 1 vers le haut, pour faire passer la tige 11a de la vis 11 dans la seconde ouverture 8 de la découpe 6 et introduit le crochet 14 dans l'ouverture 9.

Cette opération n'est possible uniquement qu'au moment où l'enrouleur 1 est à sa place définitive sur l'organe de réception 5.

L'enrouleur 1 est donc maintenu à sa place définitive et la vis 11 peut être serrée de Eaçon à fixer définitivement cet enrouleur 1 sur l'organe de réception 5.

Lorsque l'enrouleur 1 est équipé d'un pion 16 et d'une patte d'accrochage 18, comme représenté à la Fig. 3, l'opérateur introduit simultanément la tête 11b de la vis 11 dans la première ouverture 7 de la découpe 6 et la patte 18 dans l'ouverture 17.

Ensuite, l'opérateur glisse vers le haut l'enrouleur 1 de façon à introduire le pion 16 dans l'ouverture 15 et il sert la vis 11 afin de fixer définitivement l'enrouleur 1 sur l'organe de réception 5.

Lorsque l'enrouleur 1 est équipé d'un pion 26 et d'une patte d'accrochage 28, comme représenté à la Fig. 5, l'opérateur introduit la tête 11b de la vis 11 dans la première ouverture 7 de la découpe.

Ensuite, l'opérateur glisse vers le haut l'enrouleur 1 de façon à introduire le pion 26 dans l'ouverture 25 et à faire passer la patte 28 ,en forme de T, au-dessus du bord supérieur de l'organe de réception 5.

L'opérateur descend légèrement l'enrouleur afin d'introduire la patte 28 en forme de T dans l'ouverture 27 et il sert la vis 11 pour fixer définitivement l'enrouleur 1 sur l'organe de support 5.

Le dispositif de positionnement selon l'invention permet donc par des moyens simples de positionner et de maintenir l'enrouleur sur son organe de réception avant sa fixation définitive et de fixer cet enrouleur en évitant à l'opérateur des manipulations fastidieuses et notamment des manipulations simultanées de la vis de fixation et d'une visseuse.

De plus, le dispositif de positionnement selon l'invention évite une dégradation des organes de fixation au moment du vissage par un prépositionnement de la vis et de l'écrou et évite à l'opérateur de monter un élément droit à gauche, un élément avant à l'arrière ou inversement, tout en permettant d'effectuer le montage dans un temps minimum.

## Revendications

1. Dispositif de positionnement d'un enrouleur (1) de ceinture de sécurité dans un véhicule automobile, du type comprenant une structure de support (2) dans laquelle est montée en rotation une bobine (3) porte-sangle de l'enrouleur (1) et destinée à être fixée sur un organe de réception (5) solidaire de la caisse du véhiculé, **caractérisé en ce que** la structure de support (2) comporte au moins un ensemble vis-écrou (10, 11, 12) prémonté sur ladite structure de support 12) et coopérant avec une découpe (6) ménagée dans l'organe de réception (5) pour le prémontage dudit enrouleur (1) avant sa fixation sur ledit organe de réception (5) et pour la fixation de cet enrouleur (1) et **en ce qu'**il comporte des organes détrompeurs formés par une ouverture (9 ; 15 ; 25) de forme oblongue ménagée dans l'organe de réception (5) et par un élément en relief (14; 16; 26) disposé sur la structure de support (2) de l'enrouleur (1) et coopérant avec ladite ouverture (9 ; 15 ; 25) pour placer ledit enrouleur (1) sur ledit organe de réception (5) avant sa fixation.

2. Dispositif selon la revendication 1, **caractérisé en ce que** l'écrou (12) est solidaire de la structure de support. (2) de l'enrouleur (1).

3. Dispositif selon la revendication 1, **caractérisé en ce que** la tête (11b) de la vis (11) ménage avec la structure de support (2) de l'enrouleur (1) un espace libre.

4. Dispositif selon les revendications 1 et 3, **caractérisé en ce que**, pendant le transport de l'enrouleur (1), la vis (11) est immobilisée par rapport à la structure de support (2) de l'enrouleur (L).

5. Dispositif selon la revendication 4, **caractérisé en ce que** la vis (11) est immobilisée par au moins un point de colle (13) déposé sur la tige (11a) de ladite vis (11).

6. Dispositif selon la revendication 1, **caractérisé en ce que** la découpe (6) ménagée dans l'organe de réception (5) est formé par une première ouverture (7) de largeur supérieure à la tête (11b) de la vis (11) et par une seconde ouverture (8) débouchant dans la première ouverture (7) et de largeur comprise entre la largeur de la tige (11a) de la vis (11) et la largeur de la tête (11b) de ladite vis (11).

7. Dispositif selon la revendication 1, **caractérisé en ce qu'**il comporte des moyens de maintien de l'enrouleur (1) sur l'organe de réception (5) avant sa fixation définitive sur ledit organe de réception (5).

8. Dispositif selon la revendication 7, **caractérisé en ce que** les moyens de maintien sont formés par l'élément en relief (14) constituant un élément en relief d'accrochage.

9. Dispositif selon la revendication 8, **caractérisé en ce que** l'élément en relief (14) d'accrochage est formé par un crochet, un ergot ou un pion.

10. Dispositif selon la revendication 1, **caractérisé en ce que** l'élément en relief (16 ; 26) est formé par un ergot, un pion ou une patte.

11. Dispositif selon la revendication 7, **caractérisé en ce que** les moyens de maintien sont formés par une ouverture (17 ; 27) ménagée dans l'organe de réception (5) et par un élément en relief (18 ; 28) d'accrochage disposé sur la structure de support (2) de l'enrouleur (1) et coopérant avec ladite ouverture (17; 27).

12. Dispositif selon la revendication 11, **caractérisé en ce que** l'élément en relief (18 ; 28) d'accrochage est formé par un crochet ou une patte en forme de T.

## Patentansprüche

1. Vorrichtung zum Positionieren eines Sicherheitsgurt-Aufrollers (1) in einem Kraftfahrzeug der Art mit einer Trägerstruktur (2), in welcher eine Gurtrolle (3) des Aufrollers (1) drehbar montiert ist, die dafür bestimmt st, an einem Aufnahmeorgan (5) befestigt zu werden, welches einstückig mit der Karosserie ausgebildet ist, **dadurch gekennzeichnet, dass** die Trägerstruktur (2) mindestens einen auf der Trägerstruktur (2) vormontierten Schraube-Mutter-Satz (10, 11, 12) aufweist, der mit einem Ausschnitt (6) zusammenwirkt, der in dem Aufnahmeorgan (5) zur Vormontage des Aufrollers (1) vor seirer Befestigung an dem Aufnahmeorgan (5) und für die Befestigung dieses Aufrollers auf dem Aufnahmeorgan (5) vorgesehen ist, und daß sie eindeutige Anordnungs-Organe aufweist, die durch eine längliche Öffnung (9, 15, 25) in dem Aufnahmeorgan (5) und durch ein auf der Trägerstruktur (2) des Aufrollers (1) angebrachtes vorspringendes Element (14, 16, 26) ausgebildet sind, und welche mit der Öffnung (9, 15 ,25) zusammenwirken, um den Aufroller (1) auf dem Aufnahmeorgan (5) vor seiner Befestigung anzuordnen.

2. Vorrichtung gemäss Anspruch 1, **dadurch gekennzeichnet, dass** die Mutter (12) mit der Trägerstruktur (2) des Aufrollers (1) einstückig ausgebildet ist.

3. Vorrichtung gemäss Anspruch 1, **dadurch gekennzeichnet**, c ass der Kopf (11b) der Schraube (11) zusammen mit der Trägerstruktur (2) des Aufrollers (1) einen freien Raum bildet.

4. Vorrichtung gemäss den Ansprüchen 1 und 3, **dadurch gekennzeichnet, dass** während des Beförderungsbetriebs des Aufrollers (1) die Schraube in Bezug auf die Trägerstruktur (2) des Aufrollers (1) unbeweglich gemacht wird.

5. Vorrichtung gemäss Anspruch 4, **dadurch gekennzeichnet, dass** die Schraube (11) mittels wenigstens eines Klebepunktes (13) am Schaft (11a) der Schraube (11) unbeweglich gemacht wird.

6. Vorrichtung gemäss Anspruch 1, **dadurch gekennzeichnet, dass** der in dem Aufnahmeorgan (5) vorgesehene Ausschnitt (6) von einer ersten Öffnung (7), die grösser als der Kopf (11b) der Schraube (11) ist, und einer zweiten Öffnung (8), die in die erste Öffnung mündet und deren Grösse zwischen der Grösse des Schaftes (11a) der Schraube (11) und der Grösse des Kopfes (11b) der besagten Schraube (11) liegt, gebildet ist.

7. Vorrichtung gemäss Anspruch 1, **dadurch gekennzeichnet**, cass sie Vorrichtungen zum Halten des Aufrollers (1) an dem Aufnahmeorgan (5) vor seiner endgültigen Befestigung an dem Aufnahmeorgan (5) aufweist.

8. Vorrichtung gemäss Anspruch 7, **dadurch gekennzeichnet**, cass die Vorrichtungen zum Halten durch ein vorspringendes Element (14) gebildet sind, welche ein vorspringendes Einhak-Element bilden.

9. Vorrichtung gemäss Anspruch 8, **dadurch gekennzeichnet, dass** das Einhak-Element (14) durch einen Haken, einen Zapfen oder einen Metallstift gebildet ist.

10. Vorrichtung gemäss Anspruch 1, **dadurch gekennzeichnet, dass** das vorspringende Element (16, 26) durch einen Haken, einen Metallstift oder ein Anhängsel gebildet ist.

11. Vorrichtung gemäss Anspruch 7, **dadurch gekennzeichnet, dass** die Haltevorrichtungen aus einer Öffnung (17, 27), welche in dem Aufnahmeorgan (5) vorgesehen ist, und einem vorspringenden Einhak-Element (18, 28), welches an der Trägerstruktur (2) des Aufrollers (1) angebracht ist und mit der Öffnung (17, 27) zusammenwirkt, gebildet sind.

12. Vorrichtung gemäss Anspruch 11, **dadurch gekennzeichnet dass** das vorspringende Einhak-Element (18, 28) durch einen Haken oder ein Anhängsel in T-Form gebildet ist.

## Claims

1. Device for positioning a seat belt retractor (1) in a motor vehicle, of the type comprising a support structure (2) in which is rotatably mounted a webbing-carrying reel (3) of the retractor (1) and designed to be secured to a receiving member (5) attached to the vehicle bodywork, **characterised in that** the support structure (2) includes at least one nut and bolt assembly (10, 11, 12) pre-mounted on the said support structure (2) and co-operating with an opening (6) provided in the receiving member (2) for the pre-mounting of the said retractor (1) before it is secured on the said receiving member (5) and for the attachment of this retractor (1) and **in that** it has blocking members formed by an opening (9; 15; 25) of oblong shape provided in the receiving member (5) and by a raised or projecting element (14;16;26) provided on the support structure (2) cf the retractor (1) and co-operating with the said opening (9;15; 25) for locating the said retractor (1) on the said receiving member (5) before it is secured.

2. Device according to Claim 1, **characterised in that** the nut (12) is fixed to the support structure (2) of the retractor (1).

3. Device according to Claim 1, **characterised in that** there is a gap between the head (11b) of the bolt (11) and the support structure (2) of the retractor (1).

4. Device according to Claims 1 and 3, **characterised in that**, during handling of the retractor (1), the bolt (11) is held with respect to the support structure (2) of the retractor (1).

5. Device according to Claim 4, **characterised in that** the screw (11) is held by at least one blob of adhesive (13) deposited on the shank (11a) of the said bolt (11).

6. Device according to Claim 1, **characterised in that** the opening (6) provided in the receiving member (5) is formed by a first part (7) larger in size than the head (11b) of the bolt (11) and by a second part (8) leading into the first part (7) and of a size between the size of the shank (11a) of the bolt (11) and that of the head (11b) of the said bolt (11).

7. Device according to Claim 1, **characterised in that** it has means for retaining the retractor (1) on the receiving member (5) before its final attachment on the said receiving member (5).

8. Device according to Claim 7, **characterised in that** the retaining means are formed by the raised or projecting element (14) constituting a hook-like projecting element.

9. Device according to Claim 8, **characterised in that** the hook-like projecting element (14) is formed by a hook, a lug or a pin.

10. Device according to Claim 1, **characterised in that** the projecting element (16; 26) is formed by a lug, a pin or a tongue.

11. Device according to Claim 7, **characterised in that** the retaining means are formed by an opening (17; 27) provided in the receiving member (5) and by a hook-like projecting element (18; 28) provided on the support structure (2) of the retractor (1) and co-operating with the said opening (17; 27).

12. Device according to Claim 11, **characterised in that** the hook-like projecting element (18; 28) is formed by a hook or a T-shaped tongue.
